## Europäisches Patentamt
## European Patent Office
## Office européen des brevets

(11) Veröffentlichungsnummer: **0 088 165**
**B1**

(12) **EUROPÄISCHE PATENTSCHRIFT**

(45) Veröffentlichungstag der Patentschrift:
**12.03.86**

(51) Int. Cl.⁴: **A 01 J 7/00**

(21) Anmeldenummer: **82111994.8**

(22) Anmeldetag: **24.12.82**

(54) **Vorrichtung zur automatischen Spülung von Absaug-Melkanlagen.**

(30) Priorität: **06.03.82 DE 3208197**

(43) Veröffentlichungstag der Anmeldung:
**14.09.83 Patentblatt 83/37**

(45) Bekanntmachung des Hinweises auf die Patenterteilung:
**12.03.86 Patentblatt 86/11**

(84) Benannte Vertragsstaaten:
**AT BE CH FR GB IT LI NL SE**

(56) Entgegenhaltungen:
**CH - A - 399 689**
**DE - A - 1 757 520**
**DE - B - 2 335 877**
**FR - A - 2 351 588**

(73) Patentinhaber: **Westfalia Separator AG,
Werner-Habig-Strasse 1 Postfach 3720,
D-4740 Oelde 1 (DE)**

(72) Erfinder: **Meermöller, Theodor, Ing. grad., Südstrasse 40,
D-4740 Oelde 1 (DE)**
Erfinder: **Greshof, Heinrich, Zum Drostenholz 23,
D-4740 Oelde 1 (DE)**

ACTORUM AG

### Beschreibung

Die Erfindung bezieht sich auf eine Vorrichtung zur automatischen Spülung von Absaug-Melkanlagen, bei denen beim Melken die Milch und beim Spülen die Reinigungslösung in einen ständig unter Unterdruck stehenden Milchabscheider, der über einen ständig unter Unterdruck stehenden Sicherheitsabscheider an eine Unterdruckquelle angeschlossen ist, eingesogen wird und von diesem mittels einer Milchschleuse weitergeleitet wird, die Milchschleuse einen Schwimmkörper aufweist, der beim Auffüllen mit Flüssigkeit Ventile betätigt, die eine die Milchschleuse mit dem Milchabscheider verbindende Unterdruckleitung verschliessen und eine Verbindung zur äusseren Atmosphäre herstellen, wobei in den oberen Teil der Milchschleuse eine mit einem Sprühkopf versehene Verbindungsleitung mündet, die mit einem ersten Ventil und einem zweiten Ventil in Verbindung steht und das zweite Ventil selbsttätig schliesst, wenn in der Milchschleuse atmosphärischer Druck herrscht, und öffnet, wenn die Milchschleuse unter Unterdruck steht.

Eine derartige Vorrichtung ist beispielsweise bekannt aus der DE-A-1 757 520, wobei die in den oberen Teil der Milchschleuse mündende Verbindungsleitung mit der Milchleitung verbunden ist. Damit die Milchschleuse bei der automatischen Spülung in ihrem oberen Bereich mit gespült wird, muss das erste Ventil manuell geöffnet werden. Bei automatisierten Vorgängen können manuelle Eingriffe jedoch leicht vergessen werden, so dass der obere Bereich der Milchschleuse nicht mitgespült wird bzw. die Schleusenfunktion nach der Spülung gestört ist. Zur Intensivierung der Spülwirkung ist es heute üblich, periodisch Luft in die Vorlaufleitung einzulassen und dadurch Wassersäulen in den Spülleitungen zu erzeugen. Diese Luft kann bei geöffnetem ersten Ventil ebenfalls zu Störungen der Schleusenfunktion führen, da der volle Unterdruck wegen der einströmenden Luft nicht erreicht wird. Auch wird bei der bekannten Vorrichtung der Sicherheitsabscheider nicht mitgespült. Dies ist aber wünschenswert, da durch Milchdämpfe und Milchspritzer sich Bakterienherde im Sicherheitsabscheider bilden können.

Aus der DE-B-2 335 877 ist es bekannt, bei Absaug-Melkanlagen, bei denen dem Milchabscheider eine Pumpe nachgeschaltet ist, den Bodenablauf des Sicherheitsabscheiders über eine während des Melkens geschlossene und während des Spülens offene Sperrvorrichtung mit der Saugseite der Förderpumpe zu verbinden und eine von der Druckseite der Pumpe abgehende Zweigleitung mit verhältnismässig kleinem Querschnitt in den oberen Teil des Sicherheitsabscheiders münden zu lassen. Nachteilig ist bei dieser Lösung jedoch, dass die Verbindungsleitungen von der Pumpe zum Sicherheitsabscheider vor der Reinigung manuell entleert werden müssen und anschliessend die Sperrvorrichtung geöffnet werden muss. Derartige manuelle Eingriffe können zu Fehlbedienungen führen, die die Funktion der Absaug-Melkanlage sowohl beim Melken als auch bei der Reinigung in Frage stellen.

Der Erfindung liegt die Aufgabe zugrunde, eine Melkanlage der genannten Art so auszubilden, dass die Milchschleuse während der automatischen Reinigung auch in ihrem oberen Bereich gespült wird, ohne die Funktion der Schleuse zu beeinflussen, und der Sicherheitsabscheider in den Reinigungskreislauf miteinbezogen wird, ohne Sperrvorrichtungen betätigen zu müssen.

Diese Aufgabe wird dadurch gelöst, dass zwischen der Milchschleuse und der Vorlaufleitung eines Spülautomaten ein Vorlaufbehälter vorgesehen ist, der über Verbindungsleitungen mit der Vorlaufleitung und dem Sicherheitsabscheider sowie über einen Ablauf und die mit dem Sprühkopf versehene Verbindungsleitung mit der Milchschleuse verbunden ist, im Ablauf das erste Ventil und das zweite Ventil angeordnet sind, wobei das erste Ventil bei leerem Vorlaufbehälter schliesst und bei sich füllendem Vorlaufbehälter öffnet.

Auf diese Weise wird während des Spülvorganges sichergestellt, dass eine wechselweise Spülung von Milchschleuse und Sicherheitsabscheider automatisch durchgeführt werden kann, ohne dass atmosphärische Luft aus der Vorlaufleitung des Spülautomaten in die Milchschleuse bzw. aus der Milchschleuse in die Vorlaufleitung gelangt.

Die Kombination von zwei selbsttätig arbeitenden Ventilen im Ablauf des Vorratsbehälters, die den Weg für die Reinigungslösung zur Milchschleuse nur freigeben, wenn zwei Kriterien erfüllt sind, nämlich Reinigungslösung im Vorratsbehälter und Unterdruck in der Milchschleuse vorhanden, führt in Verbindung mit der vorgeschlagenen Anordnung des Vorlaufbehälters zu der vorteilhaften Wirkung der Vorrichtung. Milchschleuse und Sicherheitsabscheider werden wechselweise jeweils mit voller Spülleistung gespült, wobei durch die Grösse des Vorlaufbehälters die Menge der impulsartig zugeführten Flüssigkeit vorbestimmt ist und eine Überlastung der Milchschleuse und des Sicherheitsabscheiders verhindert wird.

Das erste Ventil des Vorlaufbehälters ist vorzugsweise als Schwimmerventil ausgebildet in Form einer Kugel, deren spezifisches Gewicht kleiner ist als das der Reinigungsflüssigkeit. Damit die Kugel nicht durch die Turbulenz der eintretenden Reinigungsflüssigkeit sofort aus ihrer Dichtposition herausgespült wird, ist der Eintrittsbereich der Reinigungsflüssigkeit in den Vorlaufbehälter durch eine senkrechte Trennwand vom Ventilbereich getrennt. Dadurch kann das Volumen des Vorlaufbehälters kleiner als $500\ cm^3$ sein.

Die Erfindung wird nachfolgend anhand eines Ausführungsbeispiels näher erläutert.

In der schematischen Zeichnung ist mit 1 der Milchabscheider bezeichnet, der über eine Unterdruckleitung 2 mit dem über Leitung 3 ständig unter Unterdruck stehenden Sicherheitsabscheider 4 und über die Milchleitung 5 mit dem Melkzeug 6 verbunden ist. Dem Milchabscheider ist eine Milchschleuse 7 nachgeschaltet, die über eine Ablaufleitung 8 mit einer eingebauten Ventilklappe 9 und eine Unterdruckleitung 10 mit dem Milchabscheider verbunden ist. Die Milchschleuse ist mit einem Schwimmkörper 11 versehen, der über ein Schaltgestänge 12 bei Füllung der Milchschleuse mit Flüssigkeit ein in der Unterdruckleitung 10 angeordnetes Ventil 13 verschliesst und ein mit der äusseren Atmosphäre verbundenes Kugelventil 14 öffnet. Die mit einer Ventilklappe 15 versehene Abflussleitung 16 der Milchschleuse ist während der Reinigung mit dem Spülautomaten 17 verbunden. Der obere Teil der Milchschleuse ist über eine Verbindungsleitung 18 mit dem Ablauf 19 des Vorlaufbehälters 20 verbunden. Über eine Verbindungsleitung 21 ist der Vorlaufbehälter mit dem Sicherheitsabscheider 4 verbunden. Im Ablauf 19 ist ein erstes Ventil 22 und ein zweites Ventil 23 angeordnet. Der Vorlaufbehälter 20 ist durch die Trennwand 24 aufgeteilt in einen Einlaufbereich 25 und einen Ventilbereich 26. Vom Einlaufbereich führt eine Verbindungsleitung 27 zur Vorlaufleitung 28 des Spülautomaten 17. Das Melkzeug 6 ist während der Reinigung über die Melkzeugaufnahme 29 mit der Vorlaufleitung verbunden. Die Entleerungsleitung 30 des Sicherheitsabscheiders 4 ist mit der Ablaufleitung 8 des Milchabscheiders 1 verbunden. Die Mündungen der Verbindungsleitung 18 in die Milchschleuse 7 und der Verbindungsleitung 21 in den Sicherheitsabscheider 4 sind mit Sprühköpfen 31, 32 versehen.

Bei der Reinigung der Absaug-Melkanlage fliesst die Reinigungsflüssigkeit aus dem Spülautomaten 17 in die Vorlaufleitung 28 und wird durch den Unterdruck über die Melkzeugaufnahme 29, das Melkzeug 6 und Milchleitung 5 in den Milchabscheider 1 gesaugt. Aus dem Milchabscheider fliesst die Reinigungsflüssigkeit durch die Ablaufleitung 8 und die Ventilklappe 9 in die ebenfalls unter Unterdruck stehende Milchschleuse 7. Gleichzeitig wird über die Verbindungsleitung 27 Reinigungsflüssigkeit aus der Vorlaufleitung 28 in den Einlaufbereich 25 des Vorlaufbehälter 20 gesaugt, der über die Verbindungsleitung 21 unter Unterdruck gehalten wird. Nach dem Auffüllen des Einlaufbereiches 25 tritt die Reinigungsflüssigkeit über die Trennwand 24 in den Ventilbereich 26 und öffnet beim Auffüllen das Ventil 22. Da Ventil 23 bei Unterdruck in der Milchschleuse 7 ebenfalls geöffnet ist, fliesst die Reinigungsflüssigkeit aus dem Vorlaufbehälter in die Milchschleuse.

Nachdem der ansteigende Schwimmkörper 11 das Schaltgestänge 12 erreicht hat, hebt sich mit dem Schwimmkörper auch das Schaltgestänge an und verschliesst das Ventil 13 zur Unterdruckleitung 10 und öffnet das Kugelventil 14 zur Atmosphäre. Durch das Einströmen atmosphärischer Luft in die Milchschleuse 7 strömt zugleich atmosphärische Luft über die Verbindungsleitung 18 zum Ablauf 19 des Vorlaufbehälters 20 und schliesst damit das Ventil 23. Die in den Vorlaufbehälter eingesaugte Reinigungsflüssigkeit fliesst jetzt in den Sicherheitsabscheider 4. Beim Aufbau von atmosphärischem Druck in der Milchschleuse 7 verschliesst die Ventilklappe 9 die Ablaufleitung 8 des Milchabscheiders 1, und die Ventilklappe 15 öffnet die zum Spülautomaten 17 führende Abflussleitung 16 der Milchschleuse. Sobald der Schwimmkörper bei fallendem Flüssigkeitsstand in der Milchschleuse den Boden des Schaltgestänges 12 erreicht hat, wird das Ventil 13 wieder geöffnet und das Kugelventil 14 geschlossen, so dass die Milchschleuse 7 wieder unter Unterdruck steht und die Reinigungsflüssigkeit wieder aus dem Milchabscheider 1 und dem Vorlaufbehälter 20 in die Milchschleuse fliessen kann. Wird Luft in die Vorlaufleitung 28 eingelassen, um die Spülwirkung zu verbessern, kommt es zu einer Unterbrechung der Reinigungsflüssigkeitszufuhr. Nachdem der Vorlaufbehälter 20 sich entleert hat, schliesst das Ventil 22 den Ablauf 19 zur Milchschleuse 7, so dass die Funktion der Milchschleuse durch Eintritt von Luft während der Evakuierungsphase nicht gestört wird.

Bei Absaug-Melkanlagen ohne Sicherheitsabscheider wird die Leitung 21 zweckmässigerweise mit dem oberen Teil des Milchabscheiders 1 verbunden.

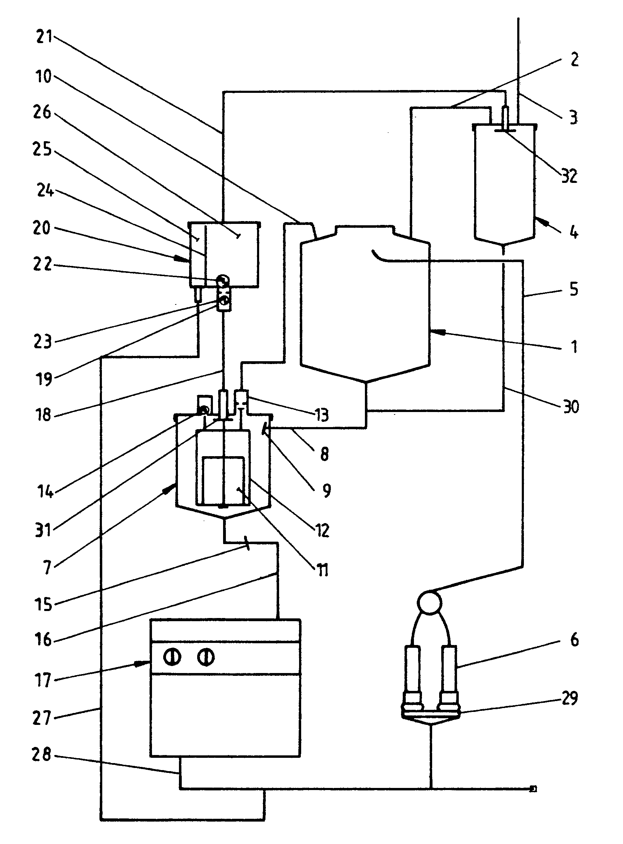

**Patentansprüche**

1. Vorrichtung zur automatischen Spülung von Absaug-Melkanlagen, bei denen beim Melken die Milch und Beim Spülen die Reinigungslösung in einen ständig unter Unterdruck stehenden Milchabscheider (1), der über einen ständig unter Unterdruck stehenden Sicherheitsabscheider (4) an eine Unterdruckquelle angeschlossen ist, eingesogen wird und von diesem mittels einer Milchschleuse (7) weitergeleitet wird, die Milchschleuse (7) einen Schwimmkörper (11) aufweist, der beim Auffüllen mit Flüssigkeit Ventile (13, 14) betätigt, die eine die Milchschleuse (7) mit dem Milchabscheider (1) verbindende Unterdruckleitung (10) verschliessen und eine Verbindung zur äusseren Atmosphäre herstellen, wobei in den oberen Teil der Milchschleuse (7) eine mit einem Sprühkopf (31) versehene Verbindungsleitung (18) mündet, die mit einem ersten Ventil (22) und einem zweiten Ventil (23) in Verbindung steht und das zweite Ventil (23) selbsttätig schliesst, wenn in der Milchschleuse (7) atmosphärischer Druck herrscht, und öffnet, wenn die Milchschleuse (7) unter Unterdruck steht, dadurch gekennzeichnet, dass zwischen der Milchschleuse (7) und der Vorlaufleitung (28) eines Spülautomaten (17) ein Vorlaufbehälter (20) vorgesehen ist, der über Verbindungsleitungen (21, 27) mit der Vorlaufleitung (28) und dem Sicherheitsabscheider (4) sowie über einen Ablauf (19) und die mit dem Sprühkopf versehene Verbindungsleitung (18) mit der Milchschleuse (7) verbunden ist, im Ablauf (19) das erste Ventil (22) und das zweite Ventil (23) angeordnet sind, wobei das erste Ventil (22) bei leerem Vorlaufbehälter (20) schliesst und bei sich füllendem Vorlaufbehälter öffnet.

2. Vorrichtung nach Anspruch 1, dadurch gekennzeichnet, dass der Vorlaufbehälter (20) durch eine Trennwand (24) in einen Einlaufbereich (25) und einen Ventilbereich (26) aufgeteilt ist.

3. Vorrichtung nach Anspruch 2, dadurch gekennzeichnet, dass das Volumen des Vorlaufbehälters (20) kleiner als 500 cm$^3$ ist.

4. Vorrichtung nach einem der Ansprüche 1 bis 3, dadurch gekennzeichnet, dass die Ventile (22, 23) als Kugelventile ausgebildet sind.

**Claims**

1. An apparatus for the automatic rinsing of pipeline milking installations, whereby during milking the milk and during rinsing the detergent solution is sucked into a milk receiving vessel (1) which is constantly under vacuum source via a sanitary trap (4) which is likewise constantly under vacuum and from which milk receiving vessel the milk or detergent solution is conveyed further by means of a releaser (7) which exhibits a float (11) which, upon filling with liquid, actuates valves (13, 14) which close a vacuum line (10) connecting the releaser (7) with the milk receiving vessel (1) and which produce a connection to the outer atmosphere, whereby a connecting line (18) provided with a spray head (31) leads into the upper part of the receiver (7), said connecting line being connected with a first valve (22) and a second valve (23), the second valve (23) closing automatically if atmospheric pressure prevails in the receiver (7) and opening if the receiver (7) is under vacuum, characterised in that between the receiver (7) and the feed line (28) of a rinsing unit (17) is located an intermediate vessel (20) which is connected to the feed line (28) and the sanitary trap (4) via connecting lines (21, 27) and with the receiver (7) via a discharge (19) and a connecting line (18) provided with the spray head (31) and in that the first valve (22) and the second valve (23) are arranged in the discharge (19), the first valve closing when intermediate vessel (20) is empty and opening when the intermediate vessel is filling up.

2. Apparatus according to claim 1 characterised in that the intermediate vessel (20) is divided up into an inlet area (25) and a valve area (26) by means of a partitioning wall (24).

3. Apparatus according to claim 2, characterised in that the volume of the intermediate vessel (20) is smaller than 500 cm³.

4. Apparatus according to one of the claims 1 to 3, characterised in that the valves (22, 23) are designed as ball valves.

**Revendications**

1. Appareil pour le lavage automatique des installations lactoduc, sur lesquelles lors de la traite le lait ou lors du lavage le produit détergent, est aspiré dans une chambre de réception du lait (1) se trouvant en permanence sous vide et raccordée à une source de vide via une piège sanitaire (4) se trouvant en permanence sous vide, et transporté à l'aide d'un extracteur de lait (7) équipé d'un flotteur (11) qui en présence de liquide actionne des vannes (13, 14) fermant une conduite de vide (10) entre l'extracteur de lait (7) et la chambre de réception du lait (1) et constituant une liaison avec l'atmosphère, une conduite de raccordement (18) pourvue d'un pulvérisateur (31) débouchant dans la partie supérieure de l'extracteur de lait (7) et étant reliée avec une première vanne (22) et une seconde vanne (23) qui ferme automatiquement en présence de pression atmosphérique dans l'extracteur de lait (7) et ouvre en cas de dépression dans l'extracteur de lait (7), caractérisé en ce qu'un bac préalable (20) est prévu entre l'extracteur de lait (7) et la conduite d'alimentation (28) d'un automate de lavage (17) qui est raccordé par les conduites (21, 27) à la conduite d'alimentation (28) et à la piège sanitaire (4) ainsi qu'à l'extracteur de lait (7) via une conduite de sortie (19) et une conduite de raccordement (18) pourvue d'un pulvérisateur, la conduite de sortie (19) comportant la première vanne (22) et la seconde vanne (23), la première fermant lorsque le bac préalable (20) est vide et ouvrant lorsque le bac préalable se remplit.

2. Appareil selon la revendication 1, caractérisé en ce que le bac préalable (20) est divisé par une paroi (24) en une chambre d'entrée (25) et une chambre des vannes (26).

3. Appareil selon la revendication 2, caractérisé en ce que le volume du bac préalable (20) est inférieur à 500 cm³.

4. Appareil selon l'une quelconque des revendications 1 à 3, caractérisé en ce que les vannes (22, 23) sont des vannes à billes.